# FASCICULE DE BREVET EUROPEEN

(11) **EP 2 352 672 B1**
(45) Date de publication et mention de la délivrance du brevet: **16.01.2013**
(21) Numéro de dépôt: 09737032.4
(22) Date de dépôt: 26.08.2009
(51) Int. Cl.: B64D 15/12, B64D 15/20

(54) **PROCÉDÉ DE CONTRÔLE D'UN SYSTÈME DE DÉGIVRAGE ÉLECTRIQUE**
STEUERUNGSMETHODE FÜR ELEKTRISCHE ENTEISUNGSVORRICHTUNG
ELECTRIC DE-ICING SYSTEM CONTROL METHOD

(30) Priorité: 17.11.2008 FR 0806416
(43) Date de publication de la demande: 10.08.2011
(73) Titulaire: Aircelle, 76700 Gonfreville l'Orcher (FR)
(72) Inventeur: PEREIRA, David, F-91470 Limours (FR); LEMAINS, Laurence, F-76700 St Laurent de Brevedent (FR)
(74) Mandataire: Gaillarde, Frédéric F. Ch.
(86) Numéro de dépôt international: PCT/FR2009/001032
(87) Numéro de publication internationale: WO 2010/055215

(56) Documents cités:
- WO-A-01/10713
- WO-A-2006/136748
- FR-A- 2 875 542
- GB-A- 772 188
- GB-A- 1 082 707
- US-A- 3 596 264
- US-A1- 2008 128 556

## Description

La présente invention concerne un procédé de dégivrage, notamment d'un ensemble de lèvre d'entrée d'air d'une nacelle de turboréacteur.

Un avion est propulsé par un ou plusieurs ensembles propulsifs comprenant chacun un turboréacteur logé dans une nacelle tubulaire. Chaque ensemble propulsif est rattaché à l'avion par un mât situé généralement sous une aile ou au niveau du fuselage.

Une nacelle présente généralement une structure comprenant une entrée d'air en amont du moteur, une section médiane destinée à entourer une soufflante du turboréacteur, une section aval abritant des moyens d'inversion de poussée et destinée à entourer la chambre de combustion du turboréacteur, et est généralement terminée par une tuyère d'éjection dont la sortie est située en aval du turboréacteur.

L'entrée d'air comprend, d'une part, une lèvre d'entrée adaptée pour permettre la captation optimale vers le turboréacteur de l'air nécessaire à l'alimentation de la soufflante et des compresseurs internes du turboréacteur, et d'autre part, une structure aval sur laquelle est rapportée la lèvre et destinée à canaliser convenablement l'air vers les aubes de la soufflante. L'ensemble est rattaché en amont d'un carter de la soufflante appartenant à la section amont de la nacelle.

En vol, selon les conditions de température et d'humidité, de la glace peut se former sur la nacelle, notamment au niveau de la surface externe de la lèvre d'entrée d'air. La présence de glace ou de givre modifie les propriétés aérodynamiques de l'entrée d'air et perturbe l'acheminement de l'air vers la soufflante.

Une solution pour dégivrer ou déglacer la surface externe consiste à éviter que de la glace ne se forme sur cette surface externe en maintenant la surface concernée à une température suffisante.

Ainsi, il est connu, par exemple du document US 4 688 757, de prélever de l'air chaud au niveau du compresseur du turboréacteur et de l'amener au niveau de la lèvre d'entrée d'air afin de réchauffer les parois. Toutefois, un tel dispositif nécessite un système de conduits d'amenée d'air chaud entre le turboréacteur et l'entrée d'air, ainsi qu'un système d'évacuation de l'air chaud au niveau de la lèvre d'entrée d'air. Ceci augmente la masse de l'ensemble propulsif, ce qui n'est pas souhaitable.

Ces inconvénients ont pu être palliés en recourrant à des systèmes de dégivrage électriques.

On pourra citer notamment le document EP 1 495 963 bien que de nombreux autres documents se rapportent au dégivrage électrique et à ses développements.

Afin d'alléger au maximum les structures utilisées dans la constitution de nacelles, et plus généralement, d'équipement aéronautique, il est de plus en plus recourru à l'emploi de matériaux composites dans ces structures. La lèvre d'entrée d'air d'une nacelle peut notamment être réalisées en matériaux composites.

L'utilisation de ces matériaux pose certains problèmes dans le cadre d'un dispositif de dégivrage électrique.

En effet, la température d'exposition de ces matériaux ne doit généralement pas dépasser un seuil critique sous peine de dénaturation du matériau et donc d'endommagement de la structure. Il convient donc de surveiller la température du matériau composite afin d'éviter toute surchauffe, notamment locale, du matériau.

Une solution évidente est d'équiper la strucutre en matériau composite de capteurs de température. Toutefois, une telle solution ne permet pas d'éviter certaines surchauffes locales entre les capteurs à moins d'augmenter de manière importante le nombre de capteurs de température utilisés. Une telle solution implique également la mise en place d'un réseau de transmission des données mesurées par le capteur, ce qui allourdit la strucutre et peut rendre le dispositif de dégivrage particulièrement complexe et peu pratique au niveau de son installation et de sa mise en oeuvre.

Pour des raisons de fiabilité, il pourrait également être nécessaire de redonder les capteurs, ce qui impacterait encore la masse de la structure et augmenterait sa complexité.

Un but de la présente invention est de fournir un dispositif de dégivrage électrique efficace sans risque d'endommager les matériaux composites utilisés.

A cet effet, l'invention a pour objet un procédé de contrôle et de commande d'au moins une résistance chauffante appartenant à un ensemble de dégivrage d'une nacelle de turboréacteur d'un avion, caractérisé en ce qu'il comprend les étapes visant à :
- obtenir d'une unité centrale de contrôle de l'avion des paramètres représentatifs des conditions extérieures de vol,
- déterminer un modèle thermique pour la structure à dégivrer correspondant aux conditions de vol obtenues,
- en fonction du modèle thermique, délivrer à la résistance chauffante la puissance électrique correspondante appropriée.

Ainsi, en utilisant un ensemble de données représentatives des conditions extérieures de vol, ces données étant disponibles au niveau d'un calculateur avion, il est possible d'optimiser le dégivrage des différents éléments de la nacelle. En effet, les conditions extérieures de température, pression, vitesse, etc ... sont déterminantes quant à la formation de givre sur une surface de la nacelle.

Ces conditions extérieures de vol permettent de situer l'avion à l'intérieur d'une enveloppe de vol, correspondant à un modèle thermique prédéterminé associant à ladite enveloppe de vol des valeurs de la puissance électrique nécessaire au dégivrage à fournir aux résistances chauffantes.

Préférentiellement, l'unité centrale de contrôle avion est un FADEC (Full Authority Digital Engine Control : régulateur numérique de moteur à pleine autorité). Cette unité de contrôle peut également être désignée sous l'acronyme EEC (Electronic Engine Control: contrôleur électronique du moteur).

Avantageusement, les paramètres représentatifs des conditions extérieures de vol sont obtenus par l'intermédiaire d'au moins une liaison de données utilisant un bus ARINC, la liaison étant de préférence redondée.

De manière préférentielle, les paramètres représentatifs des conditions extérieures de vol comprennent au moins l'un des paramètres suivants : température extérieure, pression extérieure, vitesse de l'avion, taux d'humidité.

Avantageusement, le procédé selon l'invention commande une pluralité de résistances chauffantes. Avantageusement encore, les résistances chauffantes sont réparties en au moins deux tapis de résistances chauffantes, le procédé visant à délivrer à chaque tapis une puissance électrique propre, différente ou non, en fonction du modèle thermique retenu et de la localisation des tapis. Ainsi, il est possible de prévoir des puissances différentes pour, par exemple, un premier réseau périphérique de résistances chauffantes situées au niveau de l'interne de l'entrée d'air, un deuxième réseau périphérique de résistances situé au niveau de la lèvre, et un troisième réseau périphérique situé légèrement en amont de la lèvre de la nacelle.

De manière préférentielle, le modèle thermique appliqué est choisi parmi une pluralité de modèles thermiques comprenant au moins un modèle thermique correspondant à un régime de croisière, les autres modèles thermiques pouvant être des modèles thermiques correspondant notamment à des régimes de décollage, montée, descente, attente avant atterrissage, avion au sol, entre autres.

Avantageusement, le procédé comprend une boucle de régulation de la puissance électrique fournie aux résistances chauffantes en fonction de la puissance dissipée par lesdites résistances chauffantes.

De manière préférentielle, lorsqu'un modèle thermique correspondant à une enveloppe de vol non givrante est appliqué, les résistances chauffantes sont alimentées selon un mode de préchauffage maintenant une température déterminée. Ceci permet d'avoir une meilleure réactivité du système de dégivrage lors d'une entrée dans une enveloppe de vol givrante, toute en évitant un pic de température et des surchauffes locales lors d'une montée en température trop rapide.

Avantageusement, le procédé comprend une étape d'interrogation d'un détecteur de givre, cette interrogation étant principalement effectuée lorsque le modèle thermique appliqué correspond à une enveloppe de vol givrante.

La présente invention se rapporte également à un dispositif conçu pour permettre la mise en oeuvre d'un procédé selon l'invention.

On notera bien évidemment que les présents procédé et dispositif, bien qu'appliqué à titre d'exemple à une lèvre d'entrée d'air, n'y sont pas limités et peuvent concerner toute surface susceptible d'être soumise au givre.

La présente invention sera mieux comprise à la lumière de la description détaillée qui suit en regard du dessin annexé dans lequel :
- La figure 1 est une représentation schématique d'un dispositif de contrôle d'un système de dégivrage électrique selon le procédé objet de l'invention.
- Les figures 2 et 3 sont des représentations graphiques d'enveloppes de vol givrantes en fonction de la température et pression extérieures.

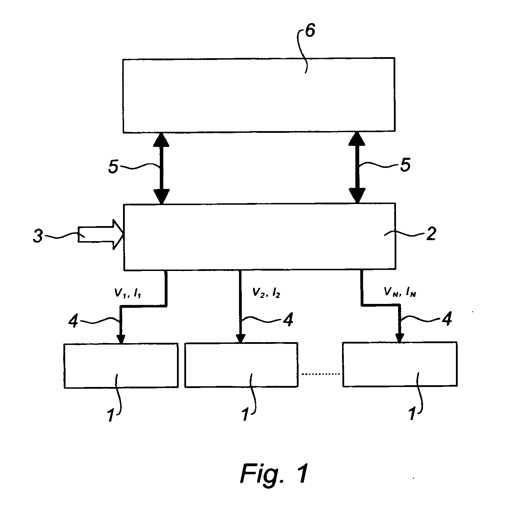

La figure 1 schématise un dispositif de contrôle d'un système de dégivrage électrique d'une entrée air d'une nacelle de turboréacteur (non représentée).

Cette entrée d'air est équipée d'une pluralité de résistances chauffantes regroupées en tapis de résistances 1.

De manière avantageuse, chaque tapis de résistances correspond à une zone particulière de la lèvre d'entrée d'air.

On pourra par exemple regrouper les résistances chauffantes en un premier tapis périphérique comprenant des résistance chauffantes situées à proximité de l'interne (Int) de l'entrée d'air, un deuxième tapis périphérique comprenant des résistances chauffantes situées au niveau de la lèvre d'entrée d'air de la nacelle, et un troisième tapis périphérique comprenant des résistances chauffantes située (D2) légèrement en amont de la lèvre de la nacelle.

En effet, ces différentes zones de la lèvre d'entrée d'air peuvent, bien que soumises aux même conditions externes, avoir des besoins différents en terme de puissance de dégivrage nécessaire.

Le dispositif de contrôle comprend un boîtier de contrôle 2 alimenté par un réseau 3 triphasé alternatif 115 Volts ou 230 V à fréquence variable, par exemple, le boîtier de contrôle 2 étant apte à son tour à alimenter électriquement les tapis 1 de résistances chauffantes par des sorties électriques 4 en convertissant la tension d'alimentation alternative ou continue en une tension d'alimentation continue et régulée pour chaque tapis 1.

Bien évidemment, selon les besoins, la tension de sortie pourrait également être alternative.

Chaque sortie électrique 4 est dédiée et alimente un tapis. Chaque tapis 1 peut donc être alimenté par une tension électrique propre fonction de la puissance électrique nécessaire au dégivrage de la zone de lèvre d'entrée d'air couverte par ledit tapis 1.

Le boîtier de contrôle 2 est également apte à mesurer le courant consommé par chaque tapis 1 chauffant. La puissance dissipée par chaque élément chauffant est donc déterminée assez aisément par le boîtier de contrôle 2 sans avoir recours à aucun capteur de température.

Selon le procédé objet de l'invention, le boîtier de contrôle 2 utilise des informations sur les conditions extérieures de vol disponibles au niveau du FADEC 6. L'échange de données entre le boîtier de contrôle 2 et le FADEC 6 est assurée par une liaison 5 bus ARINC redondée.

L'intérêt d'utiliser le FADEC pour obtenir ces données est que toutes les informations concernant les conditions de vol sont déjà disponibles et fiabilisées. Le boîtier de contrôle 2 utilise donc les informations issues du FADEC pour déterminer la puissance électrique à fournir aux tapis 1 de résistances chauffants en fonction des cas de vol et des conditions extérieures et maintien cette puissance à partir des mesures de courant et de tension réalisées par ce même boîtier de contrôle 2.

Sur un vol classique, on pourra notamment distinguer les cas de vol suivants : décollage, montée, régime de croisière, descente, attente avant atterrissage, avion au sol.

A partir de modèles thermiques existants, il est possible de déterminer la puissance électrique nécessaire au dégivrage pour chaque tapis 1 de résistances chauffantes.

Le tableau 1 ci-dessous donne un exemple des puissances nécessaires pour assurer l'anti-givrage d'une lèvre d'entrée d'air d'une nacelle de 75,1 pouces de diamètre découpée en trois zones D1, D2, Int.

**Tableau 1**

| | | | | Densité de puissance à 12 o/c | | | Densité de puissance à 6 o/c | | |
|---|---|---|---|---|---|---|---|---|---|
| Cas | Altitude | Vitesse | Température Extérieure | D1 | D2 | Int | D1 | D2 | Int |
| | (pieds) | (mach) | (°C) | P (W/m²) | P (W/m²) | P (W/m²) | P (W/m²) | P (W/m²) | P (W/m²) |
| MTO | 8000 | 0.192 | -2 | 2906 | 1889 | 9672 | 3873 | 4861 | 8044 |
| MTO | 15000 | 0.497 | -18 | 2906 | 1889 | 9672 | 3873 | 4861 | 12112 |
| Montée | 15000 | 0.388 | -8 | 2906 | 1889 | 13937 | 3873 | 4861 | 17159 |
| Croisière | 22000 | 0.785 | -30 | 2906 | 1889 | 7254 | 3873 | 4861 | 10598 |
| Descente | 15000 | 0.388 | -8 | 2906 | 1889 | 12694 | 3873 | 4861 | 12167 |
| Attente | 22000 | 0.629 | -20 | 2906 | 1889 | 13903 | 3873 | 4861 | 16049 |

Le sigle MTO signifie *Maximum Take-off* c'est-à-dire les conditions maximales de décollage.

12 o/c correspond à la position 12h au niveau de l'entrée d'air, c'est-à-dire, une position à proximité d'un mât d'accrachage.

6 o/c correspond à la position 6h au niveau de l'entrée d'air.

A partir des informations obtenues du FADEC 6, le boîtier de contrôle 2 détermine si l'avion évolue dans une enveloppe givrante ou non, et détermine le modèle thermique (cas) applicable, et donc la puissance électrique à fournir aux tapis chauffants 1 déterminée par ce modèle.

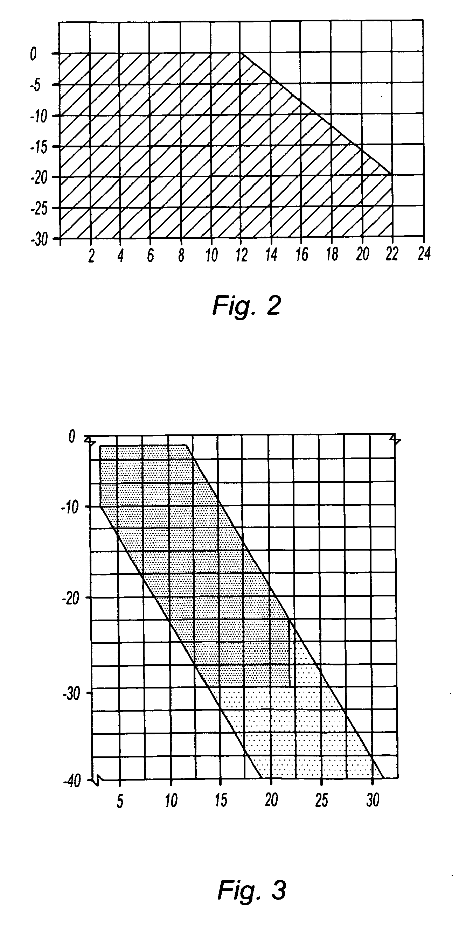

Les figures 2 et 3 sont des graphiques représentant une enveloppe givrante sur une plage de température (°C), en ordonnées, et une plage de pression (pression d'altitude : altitude à laquelle la pression atteint 1013,25 hPa), en abscisse.

Lorsque l'avion évolue en dehors d'une enveloppe givrante, le boîtier de contrôle alimente les tapis 1 selon un mode préchauffage afin de maintenir une température déterminée pour que le système soit le plus réactif possible dès que l'avion pénètre dans une enveloppe de vol givrante.

Il peut être adjoint au boîtier de contrôle 2, un détecteur de givre permettant d'appliquer la puissance électrique nécessaire uniquement lorsque l'avion évolue dans des conditions givrantes effectives.

Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention defini par les revendications.

## Revendications

1. Procédé de contrôle et de commande d'au moins une résistance chauffante (1) appartenant à un ensemble de dégivrage d'une nacelle de turboréacteur d'un avion, **caractérisé en ce qu'**il comprend les étapes visant à :
- obtenir d'une unité centrale de contrôle (6) de l'avion des paramètres représentatifs des conditions extérieures de vol,
- déterminer un modèle thermique correspondant aux conditions de vol obtenues,
- en fonction du modèle thermique délivrer à la résistance chauffante (1) la puissance électrique (4) correspondante appropriée.

2. Procédé selon la revendication 1, **caractérisé en ce que** l'unité centrale de contrôle (6) avion est un FADEC.

3. Procédé selon l'une quelconque des revendications 1 ou 2, **caractérisé en ce que** les paramètres représentatifs des conditions extérieures de vol sont obtenues par l'intermédiaire d'au moins une liaison de données utilisant un bus ARINC (5), la liaison étant de préférence redondée.

4. Procédé selon l'une quelconque des revendications 1 à 3, **caractérisé en ce que** les paramètres représentatifs des conditions extérieures de vol comprennent au moins l'un des paramètres suivants : température extérieure, pression extérieure, vitesse de l'avion, taux d'humidité.

5. Procédé selon l'une quelconque des revendications 1 à 4, **caractérisé en ce qu'**il commande une pluralité de résistances chauffantes (1).

6. Procédé selon la revendication 5, **caractérisé en ce que** les résistances chauffantes sont réparties en au moins deux tapis (1) de résistances chauffantes, le procédé visant à délivrer à chaque tapis une puissance électrique (4) propre, différente ou non, en fonction du modèle thermique retenu et de la localisation des tapis.

7. Procédé selon la revendication 6, **caractérisé en ce que** le modèle thermique appliqué est choisi parmi une pluralité de modèles thermiques comprenant au moins un modèle thermique correspondant à un régime de croisière, les autres modèles thermiques pouvant être des modèles thermiques correspondant notamment à des régimes de décollage, montée, descente, attente avant atterrissage, avion au sol.

8. Procédé selon l'une quelconque des revendications 1 à 7, **caractérisé en ce qu'**il comprend une boucle de régulation de la puissance électrique fournie aux résistances chauffante en fonction de la puissance dissipée par lesdites résistances chauffantes.

9. Procédé selon l'une quelconque des revendications 1 à 8, **caractérisé en ce que** lorsque qu'un modèle thermique correspondant à une enveloppe de vol non givrante est appliqué, les résistances chauffantes (1) sont alimentées selon un mode de préchauffage maintenant une température déterminée.

10. Procédé selon la revendication 9, **caractérisé en ce qu'**il comprend une étape d'interrogation d'un détecteur de givre, cette interrogation étant principalement effectuée lorsque le modèle thermique appliqué correspond à une enveloppe de vol givrante.

## Claims

1. A method for controlling and commanding at least one heating resistance (1) belonging to a de-icing assembly of a nacelle of an aircraft turbine jet engine, **characterized in that** it comprises the steps intended to:
- obtain parameters from a central control unit (6) of the aircraft representing outside flight conditions;
- determine a thermal model corresponding to the flight conditions obtained;
- in relation to the thermal model, deliver to the heating resistance (1) the suitable corresponding electric power (4).

2. The method according to claim 1, **characterized in that** the central control unit (6) of the aircraft is a FADEC.

3. The method according to any of claims 1 or 2, **characterized in that** the parameters representing the outside flight conditions are obtained via at least one data link using an ARINC bus (5), the link preferably being redundant.

4. The method according to any of claims 1 to 3, **characterized in that** the parameters representing the outside flight conditions comprise at least one of the following parameters: outside temperature, outside pressure, aircraft speed, humidity rate.

5. The method according to any of claims 1 to 4, **characterized in that** it commands a plurality of heating resistances (1).

6. The method according to claim 5, **characterized in that** the heating resistances are divided into at least two mats (1) of heating resistances, the method intended to deliver to each mat its own electric power (4) which may or may not be different, in relation to the chosen thermal model and the location of the mats.

7. The method according to claim 6, **characterized in that** the applied thermal model is chosen from among a plurality of thermal models comprising at least one thermal model corresponding to a cruise operating regime, the other thermal models possibly being thermal models corresponding in particular to take-off, climbing, descent, wait-before-landing, aircraft-on-ground operating regimes.

8. The method according to any of claims 1 to 7, **characterized in that** it comprises a loop regulating the electric power supplied to the heating resistances as a function of the power dissipated by the said heating resistances.

9. The method according to one of claims 1 to 8, **characterized in that** when a thermal model corresponding to a non-icing flight envelope is applied, the heating resistances (1) are supplied in pre-heating mode maintaining a determined temperature.

10. The method according to claim 9, **characterized in that** it comprises a step to poll an ice detector, this polling chiefly being performed when the applied thermal model corresponds to an icing flight envelope.

## Patentansprüche

1. Verfahren zur Kontrolle und Steuerung mindestens eines Heizwiderstands (1), der zu einer Enteisungsgruppe einer Turbotriebwerksgondel eines Flugzeugs gehört, **dadurch gekennzeichnet, dass** es die Schritte umfasst, die abzielen auf:
- von einer zentrale Kontrolleinheit (6) des Flugzeugs Parameter zu erhalten, die für externe Flugbedingungen repräsentativ sind,
- ein thermisches Modell zu bestimmen, das den erhaltenen Flugbedingungen entspricht,
- die entsprechende geeignete elektrische Leistung (4) für den Heizwiderstand (1) in Abhängigkeit vom thermischen Modell zu bestimmen.

2. Verfahren nach Anspruch 1, **dadurch gekennzeichnet, dass** die zentrale Flugzeug-Kontrolleinheit (6) ein FADEC ist.

3. Verfahren nach einem der Ansprüche 1 oder 2, **dadurch gekennzeichnet, dass** die repräsentativen Parameter der externen Flugbedingungen über mindestens eine Datenverbindung bereitgestellt werden, die einen ARINC-Bus (5) verwendet, wobei die Verbindung vorzugsweise redundant ist.

4. Verfahren nach einem der Ansprüche 1 bis 3, **dadurch gekennzeichnet, dass** die repräsentativen Parameter der externen Flugbedingungen mindestens einen der folgenden Parameter umfassen: Außentemperatur, Außendruck, Geschwindigkeit des Flugzeugs, Feuchtigkeitsgehalt.

5. Verfahren nach einem der Ansprüche 1 bis 4, **dadurch gekennzeichnet, dass** es eine Vielzahl von Heizwiderständen (1) steuert.

6. Verfahren nach Anspruch 5, **dadurch gekennzeichnet, dass** die Heizwiderstände in mindestens zwei Heizwiderstandsmatten (1) verteilt sind, wobei das Verfahren darauf abzielt, jeder Matte in Abhängigkeit vom berücksichtigten thermischen Modell und der Lokalisierung der Matten eine eigene unterschiedliche oder nicht unterschiedliche elektrische Leistung (4) bereitzustellen.

7. Verfahren nach Anspruch 6, **dadurch gekennzeichnet, dass** das angewendete thermische Modell aus einer Vielzahl von thermischen Modellen ausgewählt ist, die mindestens ein thermisches Modell umfasst, das einer Flugbetriebsart entspricht, wobei die anderen thermischen Modelle thermische Modelle sein können, die insbesondere Start-, Steigungs-, Abstiegs-, Warten vor der Landung-, Flugzeug am Boden-Betriebsarten entsprechen.

8. Verfahren nach einem der Ansprüche 1 bis 7, **dadurch gekennzeichnet, dass** es eine Regulierungsschleife der elektrischen Leistung umfasst, die an die Heizwiderstände in Abhängigkeit von der Leistung geliefert wird, die von den Heizwiderständen abgeführt wird.

9. Verfahren nach einem der Ansprüche 1 bis 8, **dadurch gekennzeichnet, dass**, wenn ein thermisches Modell angewendet wird, das einer nicht vereisenden Flugenveloppe entspricht, die Heizwiderstände (1) gemäß einem Vorheizmodus versorgt werden, der eine bestimmte Temperatur hält.

10. Verfahren nach Anspruch 9, **dadurch gekennzeichnet, dass** es einen Abfrageschritt eines Eisdetektors umfasst, wobei diese Abfrage hauptsächlich durchgeführt wird, wenn das angewendete thermische Modell einer vereisenden Flugenveloppe entspricht.
